# EUROPEAN PATENT SPECIFICATION

(11) **EP 1 611 030 B1**
(45) Date of publication and mention of the grant of the patent: **21.02.2007**
(21) Application number: 04785723.0
(22) Date of filing: 08.04.2004
(51) Int. Cl.: B65D 81/34

(54) **IMPROVEMENTS IN AND RELATING TO HEATING OF FOOD PRODUCTS**
VERBESSERUNGEN BEIM UND IN ZUSAMMENHANG MIT DEM ERWÄRMEN VON LEBENSMITTELPRODUKTEN
AMELIORATIONS APPORTEES OU SE RAPPORTANT AU CHAUFFAGE DE PRODUITS ALIMENTAIRES

(30) Priority: 08.04.2003 GB 0308099
(43) Date of publication of application: 04.01.2006
(73) Proprietor: FFP Packaging Solutions Limited, Northampton NN3 6PZ (GB); Dupont Teijin Films U.S. Limited Partnership, Wilmington, Delaware 19805 (US)
(72) Inventor: MERCER, William, Northampton NN3 6PZ (GB); JEFFELS, Pamela Moira, Lockerbie, Dumfriesshire DG11 1TR (GB)
(74) Representative: Hedges, Martin Nicholas
(86) International application number: PCT/GB2004/001566
(87) International publication number: WO 2005/000076

(56) References cited:
- WO-A-02/26493
- US-A- 3 716 369
- US-A- 4 387 551
- US-A- 5 464 969
- US-A1- 2001 036 518

## Description

This invention relates to the heating of food products, and more particularly to the heating of food products using a clam-shell heater.

Clam-shell heaters are well known in the catering industry for use in heating food products. A clam-shell heater comprises a pair of heated plates which can be moved between a spaced apart configuration to allow a food product to be loaded onto one of the plates, and a use configuration is which the plates are generally parallel to each other and the food product is sandwiched between the plates. The spacing of the plates in the use configuration is chosen so that the food product is lightly compressed between the plates allowing a high level of heat transfer from the plates to the food product by conduction. Clam-shell heaters may be used to heat either raw or precooked food products (for example a chicken product) prior to serving or may be used to cook a food product (for example a fish product) prior to serving.

Typically (but not exclusively) the food product to be cooked will be frozen when it is put between the plates.

Clam-shell heaters of the type described above are used extensively in the catering industry, and in particular in the fast food industry. They have well recognized advantages in the terms of rapid and reliable heating/cooking of products.

We have now discovered that substantial benefits in the use of clam-shell heaters flow if the food product to be cooked is pre-wrapped in a substantially sealed film envelope before it is placed between the plates of the clam-shell heater, and the heating is carried out with the film envelope still surrounding the food product. We have found that by appropriate design a film envelope can be produced in which the seals are able to withstand a pre-determined limited level of internal pressure so that steam generated during the heating process will assist in heating the product, but the package will automatically vent when steam pressure reaches a pre-determined level.

Document US-3 716 369 discloses a process for cooking food packaged in a bag.

Document US-5 464 969 discloses a self-venting package for a food product.

According to a first aspect of the present invention a method of providing a heated food product comprises: pre-forming food product into a portion having a substantially uniformed pre-determined thickness; sealing the food portion into an envelope formed from a film to produce a package, at least one of the seals of the package being peelable under conditions of elevated temperature and pressure within the envelope to vent the envelope during heating; placing the package between the plates of a clam-shell heater; closing the plates of the clam-shell heater to contact both major faces of the package; heating the food product in the clam-shell heater; removing the food product and envelope from the clam-shell heater; removing the food product from the envelope; and discarding the envelope.

The process in accordance with the present invention has several advantages. The food product can be fully prepared (for example by the inclusion of fillings, flavourings, surface coatings, etc) prior to formation of the envelope. Once the envelope has been formed and sealed the food product will be protected from contamination and, to an extent, from mechanical damage. The food product may be frozen in the envelope if desired. The package comprising the food product in the envelope can easily be loaded onto the plates of the clam-shell heater without damage to the food product. During the heating process steam generated within the envelope will assist in the heating of the food product but will be vented automatically to prevent excessive pressure buildup within the envelope. The envelope will both keep the plates of the clam-shell heater clean and will prevent cross-contamination of food products. Thus, for example, a sweet product (for example an apple pastry) can be heated in the same clam-shell heater and adjacent to a fish product without any cross-contamination of the products. The envelope facilitates removal of the food product from the clam-shell heater eliminating any risk that the food product will stick to the plates of the clam-shell heater. The film envelope will assist in keeping the products hot until it is required to be served. Immediately prior to service the product may be removed from the envelope, treated if necessary (for example by using a searing device to produce sear marks on the surface of the product) and served.

The process in accordance with the present invention offers substantial hygiene advantages since the product is protected from contamination from the moment that the envelope is sealed until immediately before the heated product is served to the final customer.

The envelope may advantageously be formed of a film of the type which is commonly used in the food packaging industry as a lidding film for substantially rigid food containers. Such films comprising a structural layer of polyethylene terephthalate (PET) having a surface coating of amorphous PET are known and are commonly sealed to rigid food containers (also having a structural layer of PET and a surface coating of amorphous PET) to provide a film closure to a package. Heretofore such film materials have not themselves been used to the formation of envelope-like packages for solid food products.

In accordance with the second aspect of the present invention there is provided a package for carrying out the method of claim 1, the package comprising: a food product contained within a sealed envelope of film material, the envelope being flexible such that, in use, the food product is lightly compressed by the plates of the clam shell heater and comprising a first structural layer and a second coating layer, the coating layer being heat sealable to seal the envelope, the seals being peelable at a predetermined temperature and internal pressure to vent the package during heating.

Preferably, in addition to the structural layer and the coating layer the film comprises a further layer which may, for example, be a further structural layer of PET. In the preferred embodiment of the invention a pigment or indicia are laminated between the structural PET layer and the further layer. By this means colour coding may be used to identify the food product contained within the package and the possibility of small portions of packaging material being left adhered to the food product after the food product has been removed from the envelope is substantially reduced because of the high visual impact of the material of the envelope.

The invention will be better understood from the following description of a preferred embodiment thereof, given by way of example only.

A food product is prepared by shaping chicken material, flavouring the material, and cooking the material. The cooked material is placed on a sheet of film material and the film material manipulated to form a sealed envelope of film surrounding the product. The envelope may be made in-situ or be pre-made or manufactured on standard pouch-making, HITS or VFFS equipment. The envelope may, for example be formed by thawing opposite edges of the film together and forming a sealed longitudinal seam, and forming end seams at opposite ends of the products so that an envelope of generally pillow-like configuration is formed. It should be understood that whilst in many instances the food product will be cooked prior to formation of the envelope in many instances, particularly in relation to fish products, the preparation of the food product prior to formation of the envelope may omit any cooking stage, the cooking of the product being carried out during heating of the package in the clam-shell heater.

A preferred packaging film for forming the envelope comprises first and second layers of PET having therebetween a dye or ink layer to produce a distinctively coloured film. One of the layers is provided with a surface coating of amorphous PET material so that the material may be heat sealed to itself to provide a seal which is reliable and robust at freezer and room temperatures, but which will delaminate at elevated temperatures when the envelope is subject to internal pressure. With such an arrangement the envelope will automatically self-vent when, during the heating phase internal pressure within the envelope reaches a level in relation to the temperature of the package. Suitable films are described in WO 0226493 and WO 03026892.

A suitable film material may comprise a primary web of 12 micron polyester (PET) film and a secondary web comprising a heat sealable coating comprising 2 microns of amorphous polyester (PET + h/s). The primary web maybe reverse printed by a gravure process in design specific colours. The film may optionally be laminated with a further polyester (PET) film to encapsulate the printing. Such a film will permit food to be heated to temperatures of up to 464°F and will withstand freezing temperatures down to -40°F. In a typical clam-shell heater the design operating temperature of the plates is no greater than 425°F. When heated the film seals will peel at pressures typically encountered during heating of a food product.

In the preferred method the package, once formed, will be deep frozen by any known deep freezing technique and stored in a deep frozen state until immediately before it is required for use. When a portion of the food product is required a package will be removed from a freezer and placed on one of the plates on a clam-shell heater. The plates of the clam-shell heater will then be closed to compress the food product lightly between the plates. Heating of the food product will occur largely by conduction from the plates of the clam-shell heater through the film material of the envelope into the food product. Since the cooking characteristics of the product and the temperature of the plates of the clam-shell heater are known the product may be raised to the required temperature merely by heating it in the clam-shell heater for a predetermined period. If the envelope is formed from a coloured film as mentioned above the colour of the film may provide an indication of the product contained within. Alternatively, indicia identifying the product may be incorporated between the PET layers of the film and/or the exterior of the film may be provided with indicia identifying the product, and similar information.

As a food product is heated between the clam-shell heater plates steam will be generated and steam pressure will build up within the envelope. At the elevated temperature induced by the clam-shell heater the seals of the envelope will be vulnerable to self-peeling under the influence of internal pressure within the package. Accordingly, the package will automatically vent as it is heated.

At the end of a predetermined heating period the package will be removed from the clam-shell heater. In some instances the film may be removed immediately and the product served. In other instances the film will be removed immediately and the product further treated (for example by searing) before it is served. In certain instances the heated food product may be left within the envelope for some time after heating, the envelope being removed immediately prior to serving.

The invention utilizes a material which, in itself; is known within the packaging industry in a novel and inventive manner to provide a food package and a method of heating a food product which have substantial advantages as compared with techniques available in the prior art. Forming the food product into a package by surrounding it with a sealed envelope offers substantial advantages in terms of preserving the condition of the food product during storage and handling. Heating the product within the envelope offers substantial advantages in terms of cleanliness and elimination of cross-contamination. By designing the seals of the package to be self-venting the advantage of containing steam around the product during the early phase of cooking and venting that steam when the pressure of the steam becomes excessive are obtained. By forming the film as a laminate with a distinctive colour ink or dye contained within the laminate the possibility of small portions of film being left adhered to the film product is substantially reduced.

Although the invention is being described with particular reference to the heating of a pre-cooked food product it is to be understood that the invention is also applicable to the cooking of food products by heating, the food product contained within the envelope prior to heating being essentially uncooked.

## Claims

1. A method of providing a heated food product comprising: pre-forming food product into a portion having a substantially uniformed pre-determined thickness; sealing the food portion into an envelope formed from a film to produce a package, at least one of the seals of the package being peelable under conditions of elevated temperature and pressure within the envelope to vent the envelope during heating; **characterized by** placing the package between the plates of a clam-shell heater; closing the plates of the clam-shell heater to contact both major faces of the package; heating the food product in the clam-shell heater; removing the food product and envelope from the clam-shell heater; removing the food product from the envelope; and discarding the envelope.

2. A package for carrying out the method of claim 1, the package comprising: a food product contained within a sealed envelope of film material, the envelope being flexible such that, in use, the food product is lightly compressed by the plates of the clam shell heater and comprising a first structural layer and a second coating layer, the coating layer being heat sealable to seal the envelope, the seals being peelable at a predetermined temperature and internal pressure to vent the package during heating.

3. A package according to claim 2 wherein, in addition to the structural layer and the coating layer the film comprises a further layer, preferably a further structural layer of PET.

4. A package according to claim 2 or claim 3 wherein a layer of pigment or indicia is laminated within the film material.

5. A package according to any of claims 2-4 wherein the first structural layer is of PET.

6. A package according to any of claims 2-5 wherein the envelope has a longitudinal sealed seam and transverse end sealed seams and is of generally pillow-like configuration.

7. A package according to any of claims 2-6 wherein the envelope is made in-situ around the food product.

8. A package according to any of claims 2-7 wherein the food product is cooked before the envelope is formed.

9. A package according to any of claims 2-8 wherein the film remains intact at temperatures of up to at least 425°F.

10. A package according to any of claims 2-9 wherein the package is deep frozen.

## Patentansprüche

1. Verfahren zum Bereitstellen eines erwärmten Lebensmittelprodukts, das Verfahren umfasst: Vorformen des Lebensmittelprodukts in eine Portion mit einer im Wesentlichen gleichmäßigen vorgegebenen Dicke, Versiegeln der Lebensmittelportion in einer Ummantelung, die aus einer Folie gebildet ist, um eine Verpackung zu erzeugen, wobei wenigstens eines der Siegel unter erhöhter Temperatur- und Druckbedingung in der Ummantelung ablösbar ist, um die Ummantelung während des Erwärmens zu entlüften, und ist **gekennzeichnet durch**: Anordnen der Verpackung zwischen den Platten eines zweischaligen Erhitzers, Schließen der Platten des zweischaligen Erhitzers, um mit beiden Hauptflächen der Verpackung in Kontakt zu sein, Erwärmen des Lebensmittelprodukts in dem zweischaligen Erhitzer, Entnehmen des Lebensmittelprodukts und der Ummantelung aus dem zweischaligen Erhitzer, Entfernen des Lebensmittelprodukts aus der Ummantelung und Entsorgen der Ummantelung.

2. Verpackung zum Ausführen des Verfahrens nach Anspruch 1, die Verpackung umfasst: ein Lebensmittelprodukt, enthalten in einer versiegelten Ummantelung aus Folienmaterial, wobei die Ummantelung so flexibel ist, dass das Lebensmittelprodukt durch die Platten des zweischaligen Erhitzers geringfügig zusammengepresst wird, und eine erste Strukturschicht und eine zweite Beschichtungsschicht umfasst, wobei die Beschichtungsschicht heißversiegelbar ist, um die Ummantelung zu versiegeln und die Siegelungen bei einer vorgegebenen Temperatur und bei einem vorgegebenen Innendruck ablösbar sind, um die Verpackung während des Erwärmens zu entlüften.

3. Verpackung nach Anspruch 2, wobei die Folie zusätzlich zu der Strukturschicht und der Beschichtungsschicht eine weitere Schicht, bevorzugt eine weitere Strukturschicht aus PET, umfasst.

4. Verpackung nach Anspruch 2 oder 3, wobei eine Schicht aus Pigment ist oder Merkmale in die Folie geschichtet sind.

5. Verpackung nach einem der Ansprüche 2 bis 4, wobei die erste Strukturschicht aus PET ist.

6. Verpackung nach einem der Ansprüche 2 bis 5, wobei die Ummantelung eine in Längsrichtung verlaufende Siegelnaht und in Querrichtung verlaufende End-Siegelnähte aufweist und von im Allgemeinen kissenartiger Konfiguration ist.

7. Verpackung nach einem der Ansprüche 2 bis 6, wobei die Ummantelung In-situ um das Lebensmittelprodukt herum gefertigt wird.

8. Verpackung nach einem der Ansprüche 2 bis 7, wobei das Lebensmittelprodukt gekocht wird, bevor die Ummantelung ausgebildet wird.

9. Verpackung nach einem der Ansprüche 2 bis 8, wobei die Folie bis zu Temperaturen von wenigstens 425 °F intakt bleibt.

10. Verpackung nach einem der Ansprüche 2 bis 9, wobei die Verpackung tiefgefroren ist.

## Revendications

1. Procédé fournissant un produit alimentaire chauffé comprenant les étapes consistant à : préformer un produit alimentaire pour obtenir une portion ayant une épaisseur prédéterminée sensiblement uniforme ; enfermer hermétiquement la portion d'aliment dans une enveloppe formée à partir d'un film pour produire un emballage, l'une des fermetures au moins dudit emballage étant pelable dans des conditions de température et de pression élevées à l'intérieur de l'enveloppe pour ventiler l'enveloppe durant le chauffage, **caractérisé en ce que** l'emballage est placé entre les plaques d'un four coquille ; les plaques dudit four sont fermées pour qu'elles touchent les deux surfaces principales de l'emballage ; le produit alimentaire est chauffé dans le four coquille ; le produit alimentaire et l'enveloppe sont retirés du four coquille ; le produit alimentaire est retiré de l'enveloppe ; et l'enveloppe est jetée.

2. Emballage pour mettre en oeuvre le procédé de la revendication 1, l'emballage comprenant : un produit alimentaire contenu dans une enveloppe de matériau de film scellée, l'enveloppe étant souple de telle sorte que lors de l'utilisation le produit alimentaire est légèrement comprimé par les plaques du four coquille ; et une première couche structurelle et une deuxième couche de revêtement, la couche de revêtement pouvant être scellée à chaud pour sceller l'enveloppe, les fermetures étant pelables à une température et une pression interne prédéterminées pour ventiler l'emballage durant le chauffage.

3. Emballage selon la revendication 2 dans lequel, outre la couche structurelle et la couche de revêtement, le film comprend une couche supplémentaire, de préférence une couche structurelle supplémentaire de PET.

4. Emballage selon la revendication 2 ou 3 dans lequel une couche de pigment ou une marque est appliquée dans le matériau de film.

5. Emballage selon l'une quelconque des revendications 2 à 4 dans lequel la première couche structurelle est en PET.

6. Emballage selon l'une quelconque des revendications 2 à 5 dans lequel l'enveloppe a une soudure longitudinale hermétique et des soudures transversales hermétiques aux extrémités, et présente une configuration générale en forme de coussin.

7. Emballage selon l'une quelconque des revendications 2 à 6 dans lequel l'enveloppe est fabriquée in-situ autour du produit alimentaire.

8. Emballage selon l'une quelconque des revendications 2 à 7 dans lequel le produit alimentaire est cuit avant la formation de l'enveloppe.

9. Emballage selon l'une quelconque des revendications 2 à 8 dans lequel le film reste intact à des températures pouvant atteindre au moins 425 °F (218°C).

10. Emballage selon l'une quelconque des revendications 2 à 9 dans lequel l'emballage est congelé.
